# EUROPEAN PATENT APPLICATION

(11) **EP 4 685 087 A1**
(43) Date of publication of application: **28.01.2026**
(21) Application number: 23928583.6
(22) Date of filing: 20.03.2023
(51) Int. Cl.: B65G 43/00

(54) **FOREIGN MATTER REMOVAL DEVICE AND CONTROL METHOD FOR FOREIGN MATTER REMOVAL DEVICE**

(71) Applicant: Fuji Corporation, Chiryu-shi, Aichi 472-8686 (JP)
(72) Inventor: KONDO, Hironori, Chiryu-shi, Aichi 472-8686 (JP)
(74) Representative: Grünecker Patent- und Rechtsanwälte PartG mbB
(86) International application number: PCT/JP2023/010962
(87) International publication number: WO 2024/195000

(57) **Abstract**

A foreign matter removal device of the present disclosure includes a removal section configured to remove, using a collection section, a foreign matter contained in a target object conveyed in a conveyance direction by a conveyance device, and a control section configured to execute any stop process of moving the collection section to a side end portion side of the conveyance device and then stopping the collection section or stopping the collection section on the conveyance device, in accordance with a stop event, corresponding to input by a worker or detection by a device, which occurs while the removal section is in operation.

## Description

### Technical Field

The present description discloses a foreign matter removal device and a control method for a foreign matter removal device.

### Background Art

Conventionally, as a recycling device, for example, there has been proposed a recycling device including: a picking robot that conveys a target object from a conveyance source to a conveyance destination; and a robot hand that is connected to the picking robot and that grips, as the target object, a smelting raw material containing valuable metals that can be processed in a smelting process or an off-system raw material to be sent to the outside of the smelting process from among electronic component scraps (for example, see Patent Literature 1). In this recycling device, the robot hand includes a suction pad that suctions the target object and a clamping section that clamps the target object suctioned by the suction pad, and the electronic component scraps can be sorted more efficiently.

### Citation List

### Patent Literature

Patent Literature 1:JP-A-2021-186921

### Summary of the Invention

### Technical Problem

However, in the device of Patent Literature 1, the robot hand may be stopped in accordance with input by a worker or the like, but a stop position of the robot hand or the like is not particularly considered. Therefore, depending on the stop position of the robot hand, the worker may need to manually move the robot hand, or may need to move the robot hand to an opposite side of a conveyance path in accordance with the stop position, which may reduce efficiency. As described above, it has been required to further improve the efficiency of a foreign matter removal device.

The present disclosure has been made to solve such a problem, and a main object of the present disclosure is to provide a foreign matter removal device and a control method for a foreign matter removal device that are capable of further improving efficiency by making a stop position of a removal section more appropriate.

The present disclosure has adopted the following means in order to achieve the above-described object.

That is, a foreign matter removal device disclosed in the present description includes:
a removal section configured to remove, using a collection section, a foreign matter contained in a target object conveyed in a conveyance direction by a conveyance device; and
a control section configured to execute any stop process of moving the collection section to a side end portion side of the conveyance device and then stopping the collection section or stopping the collection section on the conveyance device, in accordance with a stop event, corresponding to input by a worker or detection by a device, which occurs while the removal section is in operation.

In the foreign matter removal device, since the collection section is stopped on the side end portion side of the conveyance device or on the conveyance device in accordance with the stop event corresponding to the input by the worker or the detection by the device, the collection section of the removal section can be stopped at an appropriate position in accordance with the stop event. Therefore, in the foreign matter removal device, the stop position of the removal section can be made more appropriate, and the work efficiency can be further improved.

### Brief Description of Drawings

Fig. 1 is a diagram illustrating an example of a configuration of processing system 10.
Fig. 2 is a diagram illustrating an example of a schematic configuration of foreign matter removal device 30.
Fig. 3 is a perspective view illustrating an example of a schematic configuration of removal section 40.
Fig. 4 is a diagram illustrating an example of captured images 71 and 72 of detection section 31.
Fig. 5 is a flowchart illustrating an example of a foreign matter removal process routine.
Fig. 6 is a flowchart illustrating an example of an operation stop process routine.
Fig. 7 is a diagram illustrating examples of a cycle stop process, an error stop process, and a system stop process.
Fig. 8 is a diagram illustrating an example of an abnormal stop process of processing system 10.

### Description of Embodiments

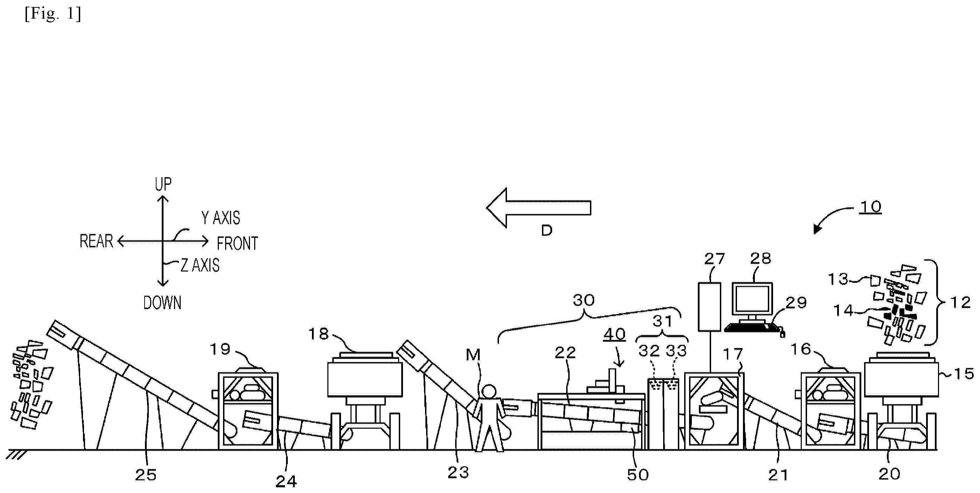

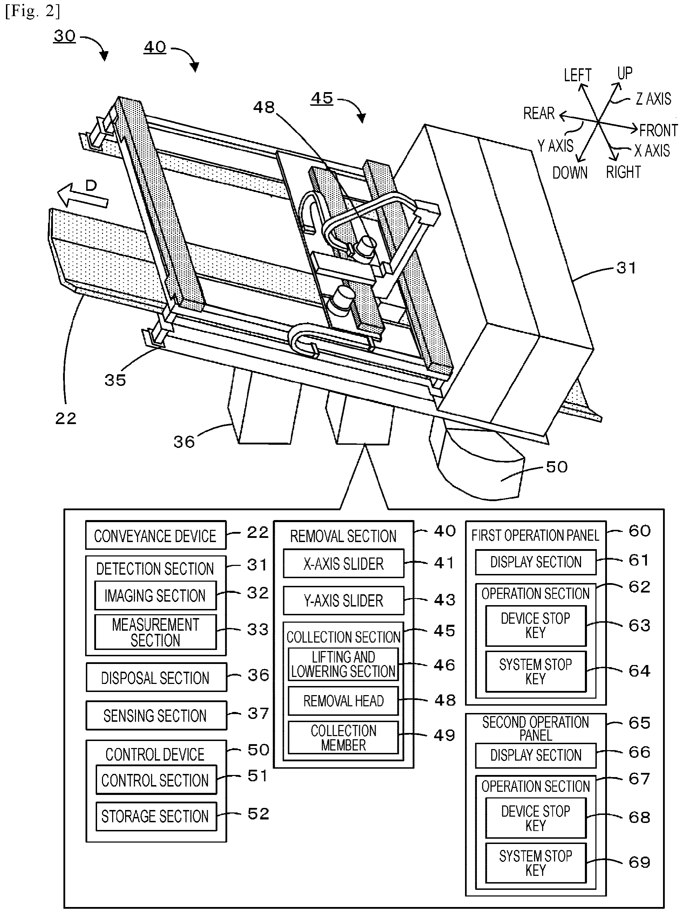

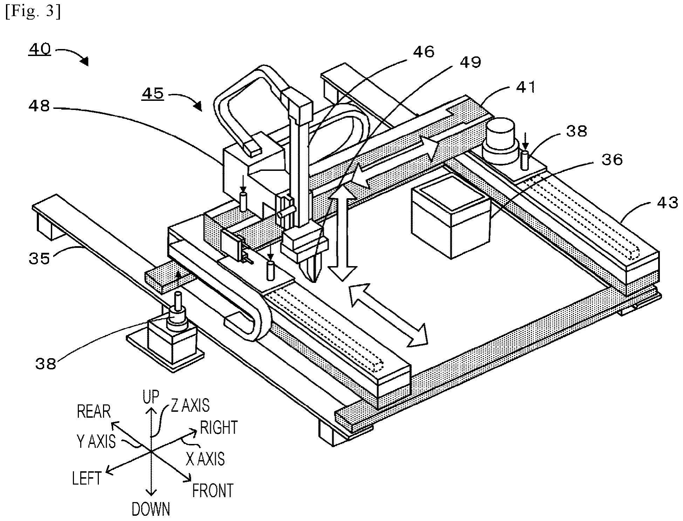

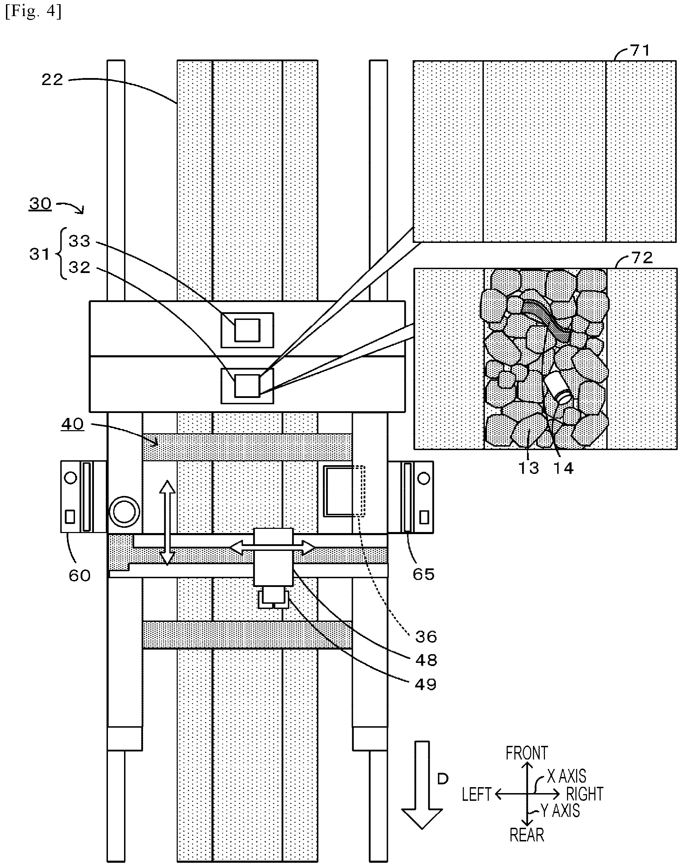

An embodiment of the present disclosure will be described with reference to the drawings. Fig. 1 is a diagram illustrating an example of a configuration of processing system 10 that executes a process of recycling a waste material as an example. Fig. 2 is a diagram illustrating an example of a schematic configuration of foreign matter removal device 30. Fig. 3 is a perspective view illustrating an example of a schematic configuration of removal section 40. Fig. 4 is a diagram illustrating a plan view of removal section 40 and an example of captured images 71 and 72 captured by detection section 31. In the present embodiment, a left-right direction, a front-rear direction, and an up-down direction are as illustrated in Figs. 1 to 4, 7, and 8. Further, in the present embodiment, a central region of a conveyance path for conveying processing material 12 as a processing target is referred to as central region C, and a direction in which processing material 12 is conveyed is referred to as conveyance direction D.

Processing material 12 as a target object that is processed by processing system 10 is a mixture obtained by mixing waste material 13, which is a target for recycling such as stone, sand, and concrete, with foreign matter 14 including paper, resin, wood, metal, or the like. As illustrated in Fig. 1, processing system 10 includes primary crusher 15, primary magnetic separator 16, screen machine 17, foreign matter removal device 30, secondary crusher 18, secondary magnetic separator 19, conveyance devices 20 to 25, and supervisory device 27.

Primary crusher 15 is a device that primarily crushes processing material 12 as a raw material. Primary crusher 15 crushes processing material 12 such that processing material 12 has, for example, a size equal to or smaller than a predetermined primary size (for example, 40 cm or less). Primary magnetic separator 16 is a device that removes the foreign matter which is magnetic material contained in processing material 12 by means of a magnetic force. Screen machine 17 is a device that separates processing material 12 having a size equal to or larger than the primary size and processing material 12 having a size smaller than the primary size, by causing processing material 12 to pass over a mesh, for example. Secondary crusher 18 is a device that secondarily crushes processing material 12 to a smaller size than in primary crusher 15. Secondary crusher 18 crushes processing material 12 such that processing material 12 has a size equal to or smaller than a predetermined secondary size (for example, 10 cm or less). Secondary magnetic separator 19 is a device that removes the magnetic material, which is not fully removed by primary magnetic separator 16 and foreign matter removal device 30, from processing material 12.

Conveyance devices 20 to 25 as conveyance lines are devices that place processing material 12 on a conveyance path and convey processing material 12 along conveyance direction D, and are configured as, for example, belt conveyors. Conveyance devices 20 to 25 may have configurations other than the belt conveyor as long as processing material 12 is conveyed.

Supervisory device 27 is a device that manages entire processing system 10. Supervisory device 27 includes display section 28 as a display and input device 29 including a keyboard and a mouse. For example, when a failure, an error, or the like has occurred in any device of processing system 10, supervisory device 27 outputs an operation stop command to the other devices. Each of the devices of processing system 10 is provided with a sensing sensor that senses an operation abnormality, and supervisory device 27 receives a signal of the sensing sensor.

Foreign matter removal device 30 is configured as a collection device that collects the target object, and is a device that places processing material 12 on a conveyance surface of conveyance device 22, conveys processing material 12 in the conveyance line, and collects and removes foreign matter 14. As illustrated in Fig. 2, foreign matter removal device 30 includes detection section 31, removal section 40, and control device 50. Foreign matter removal device 30 includes disposal section 36 and sensing section 37. Conveyance device 22 places processing material 12 on the conveyance surface and conveys processing material 12 at a predetermined conveyance speed.

Detection section 31 is a device that detects waste material 13 and foreign matter 14. Detection section 31 is arranged upstream of removal section 40 in conveyance direction D. Detection section 31 includes imaging section 32 that captures an image of processing material 12 containing waste material 13 and foreign matter 14 conveyed by conveyance section 22, and measurement section 33 that measures a height of processing material 12. Imaging section 32 is configured as, for example, a camera that captures an image of processing material 12 conveyed by being placed on the conveyance surface of conveyance device 22. Image section 32 captures an image of a predetermined range including processing material 12 from above the conveyance surface of conveyance device 22, and outputs image data to control device 50. As illustrated in Fig. 4, imaging section 32 captures captured images 71 and 72 including waste material 13 and foreign matter 14. Captured image 71 is an example of an image in a state where processing material 12 is not conveyed onto conveyance device 22. Captured image 72 is an example of an image in a state where processing material 12 or foreign matter 14 is conveyed onto conveyance device 22. Measurement section 33 detects the height of processing material 12 or the like on conveyance device 22. Measurement section 33 may be provided, for example, upstream of removal section 40 in conveyance direction D, and may be configured as a stereo camera including two cameras. Alternatively, measurement section 33 may be a sensor that detects a reflected wave obtained by irradiating the conveyance surface and obtains a height of a reflection position. Imaging section 32 or measurement section 33 are held above the conveyance surface of conveyance device 22 by a holding member provided to straddle conveyance device 22 in the left-right direction. Measurement section 33 outputs information on the detected height of processing material 12 to control device 50. Foreign matter removal device 30 including measurement section 33 can perform conveyance control of processing material 12 using information on a height direction of processing material 12. Meanwhile, either imaging section 32 or measurement section 33 may be omitted in foreign matter removal device 30 as long as the height of processing material 12 can be measured.

Disposal section 36 is a dust box as an accommodation section that accommodates foreign matter 14. Foreign matter 14 collected by collection section 45 of removal section 40 is dropped into disposal section 36. Disposal section 36 may include multiple accommodation containers and may perform sorting in accordance with the weight and the material of foreign matter 14.

Sensing section 37 is a sensor that senses a state of a drive mechanism provided in foreign matter removal device 30. Removal section 40 includes a drive mechanism, such as X-axis slider 41 or Y-axis slider 43 described later. The drive mechanism includes a drive motor, an air cylinder, and the like, and lubricating oil is supplied from a liquid feed pump to the drive motor via supply pipe 38, and compressed air is supplied from a compressor to the air cylinder. For example, sensing section 37 senses an amount of lubricating oil of each drive mechanism, and senses an air pressure supplied to the drive mechanism or the like. Sensing section 37 may be a non-contact or contact sensor that senses the amount of lubricating oil, or may be a pressure gauge that senses the air pressure. Sensing section 37 outputs a signal to control device 50 when the amount of lubricating oil falls below a predetermined allowable range. When the air pressure falls below the predetermined allowable range, sensing section 37 outputs the signal to control device 50.

Removal section 40 is a device that collects and removes, using collection member 49, the target object such as foreign matter 14 contained in processing material 12 conveyed in conveyance direction D on the conveyance path by conveyance device 22. Removal section 40 is configured as, for example, an XY robot. Removal section 40 detects and removes foreign matter 14 present in processing material 12 based on the captured image captured by imaging section 32. Removal section 40 is provided downstream of detection section 31 in conveyance direction D. Removal section 40 includes X-axis slider 41, Y-axis slider 43, and collection section 45. Removal section 40 disposes of collected foreign matter 14 to disposal section 36 arranged on a side of conveyance device 22. Removal section 40 may have another configuration, such as an articulated arm robot.

X-axis slider 41 includes a drive mechanism. The drive mechanism includes a guide rail that is installed along a direction perpendicular to conveyance direction D of conveyance device 22, a slider that moves along the guide rail, and a drive motor that drives the slider. The guide rail is fixed to a slider of Y-axis slider 43 installed on conveyance section 22 along conveyance direction D. Removal head 48, which is provided with lifting and lowering section 46, is fixed to the slider of X-axis slider 41. The drive mechanism may be, for example, a linear motion mechanism employing a ball screw including a screw shaft and a nut. The drive mechanism is not particularly limited as long as the drive mechanism is a linear motion mechanism, and may be a linear motor or the like. On X-axis slider 41, removal head 48 is moved by the drive mechanism along an X-axis direction. Y-axis slider 43 includes a drive mechanism. The drive mechanism includes a guide rail that is installed along conveyance direction D, a slider that moves along the guide rail, and a drive motor that drives the slider. The guide rail is fixed to support section 35 installed on conveyance section 22 along conveyance direction D. X-axis slider 41 is arranged on the slider of Y-axis slider 43. On Y-axis slider 43, X-axis slider 41 is moved by the drive mechanism along a Y-axis direction.

Collection section 45 is a unit that collects the object such as foreign matter 14 using collection member 49, and includes, for example, lifting and lowering section 46, removal head 48, and collection member 49. Lifting and lowering section 46 is a drive mechanism fixed to removal head 48 arranged on X-axis slider 41, and lifts and lowers collection member 49 along a Z-axis direction. The drive mechanism may be similar to the drive mechanism of X-axis slider 41 or Y-axis slider 43. Collection member 49 is a member that collects the object, and may be a gripping claw that grips the object. Alternatively, collection member 49 may be a suction nozzle that picks up the object by means of a negative pressure. Collection section 45 grips foreign matter 14 and releases the gripping of foreign matter 14 by opening and closing operations of collection member 49, to collect and remove foreign matter 14 from processing material 12. Collection section 45 opens and closes collection member 49 with a gripping drive section (not shown). Collection member 49 is moved in the X, Y, and Z directions within a predetermined range of conveyance section 22, by X-axis slider 41, Y-axis slider 43, and lifting and lowering section 46.

Control device 50 is a device that controls entire foreign matter removal device 30, and includes control section 51 and storage section 52. Control section 51 is configured as a microprocessor centered around CPU, and controls the entire device. Control section 51 outputs control signals to detection section 31 and removal section 40, and inputs signals from detection section 31 and removal section 40. Storage section 52 is a storage medium that stores information and includes, for example, HDD or a flash memory. Storage section 52 stores, for example, information on collection of the foreign matter.

Foreign matter removal device 30 is provided with first operation panel 60 and second operation panel 65. In foreign matter removal device 30, first operation panel 60 is arranged on a first side end portion side of conveyance device 22, and second operation panel 65 is arranged on a second side end portion side. Although foreign matter removal device 30 includes two operation panels, foreign matter removal device 30 may include only one operation panel or three or more operation panels. It is preferable that foreign matter removal device 30 includes operation panels on both side end portion sides of conveyance device 22 from the viewpoint of achieving a quick operation by worker M. First operation panel 60 is a device operated by worker M, and includes display section 61, operation section 62, and the like. Display section 61 is a display that displays information related to the device. Operation section 62 receives an input operation from worker M, and includes a device operation key, a system operation key, and the like in addition to device stop key 63 and system stop key 64. Device stop key 63 is a key operated when foreign matter removal device 30 is stopped, for example, when maintenance of foreign matter removal device 30 is performed. System stop key 64 is a key operated when entire processing system 10 is stopped, for example, when worker M takes a rest. The device operation key and the system operation key are operated at the start of operation of foreign matter removal device 30 and the start of operation of processing system 10, respectively. Second operation panel 65 includes display section 66 and operation section 67 having device stop key 68 and system stop key 69. Since second operation panel 65 has the same configuration as first operation panel 60, the description thereof will be omitted. Here, first operation panel 60 and second operation panel 65 are simply collectively referred to as the operation panel.

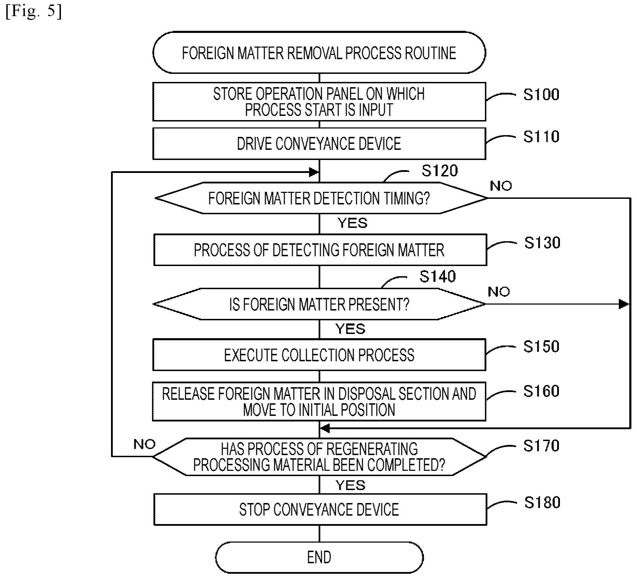

Next, an operation of foreign matter removal device 30 configured as described above will be described. First, a process of removing foreign matter 14 from processing material 12 to produce waste material 13 will be described. Fig. 5 is a flowchart showing an example of a foreign matter removal process routine executed by control section 51 of control device 50. This routine is stored in storage section 52, and is executed by control section 51 after foreign matter removal device 30 is activated based on the operation input on the operation panel. When this routine is started, control section 51 first stores, in storage section 52, whether the operation panel to which the start of the process is input is first operation panel 60 or second operation panel 65 (S100), drives conveyance device 22 (S110), and determines whether a foreign matter detection timing has arrived (S120). The foreign matter detection timing may be, for example, a timing after imaging section 32 captures an image of processing material 12 conveyed on the conveyance path of conveyance device 22. Imaging section 32 may capture an image of the conveyance path with a seamless image.

When the foreign matter detection timing has arrived in S120, control section 51 performs a process of detecting waste material 13 and foreign matter 14 based on the captured image captured by imaging section 32 and a height value measured by measurement section 33 (S130). As the process of detecting waste material 13, for example, control section 51 performs a process of detecting a region having different brightness from the conveyance surface of conveyance device 22 and setting the region as a region of processing material 12. In addition, control section 51 may obtain a region of waste material 13 from the acquired height of the conveyance surface. Further, control section 51 can determine whether foreign matter 14 is present, based on whether the region of foreign matter 14 is present in the captured image (see Fig. 4). Next, control section 51 determines whether foreign matter 14 is present in the captured image of conveyance device 22 (S140). When foreign matter 14 is present in conveyance device 22, control section 51 executes a process of collecting foreign matter 14 (S150). In the process of collecting foreign matter 14, control section 51 moves collection member 49 to a position of foreign matter 14, lowers collection member 49, and causes collection member 49 to collect foreign matter 14. Subsequently, control section 51 moves collection member 49 onto disposal section 36, releases foreign matter 14, and moves collection member 49 to a predetermined initial position (S160). After S160, when there is no foreign matter 14 in S140 or when the foreign matter detection timing has not arrived in S120, control section 51 determines whether a process of regenerating processing material 12 has been completed (S170). When the process of regenerating processing material 12 has not been completed, control section 51 repeatedly executes the processes of S120 and the subsequent steps. That is, control section 51 detects foreign matter 14 and repeatedly executes the process of removing foreign matter 14. On the other hand, when the process of regenerating processing material 12 has been completed in S170, control section 51 stops conveyance device 22 (S180), and terminates this routine. When the operation panel is operated by worker M during the execution of the foreign matter removal process, control section 51 stores the operation panel. Control section 51 receives a sensor value from sensing section 37, and senses a state of each drive mechanism.

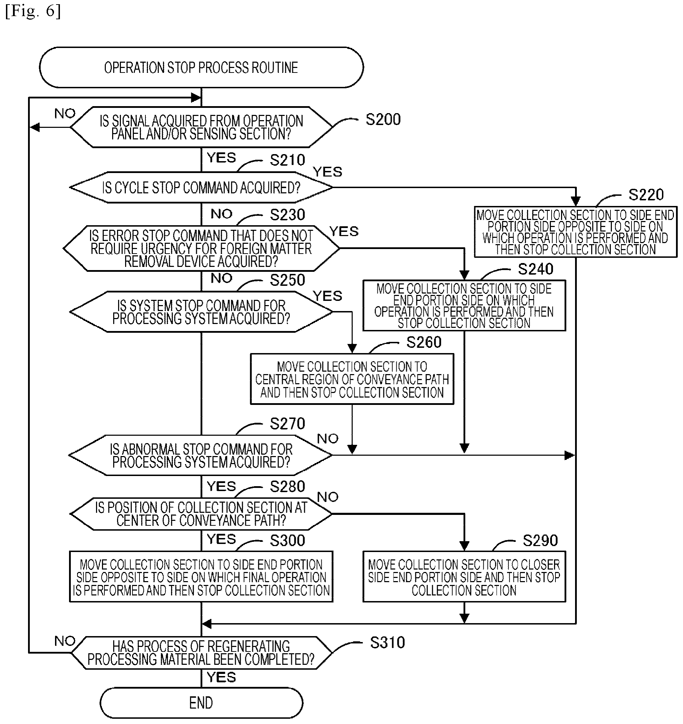

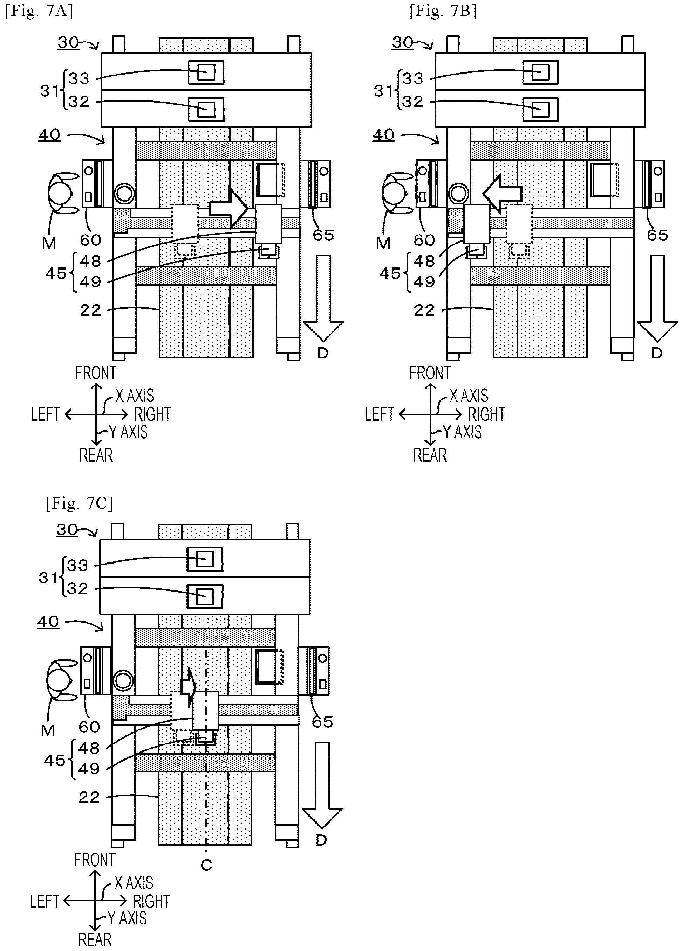

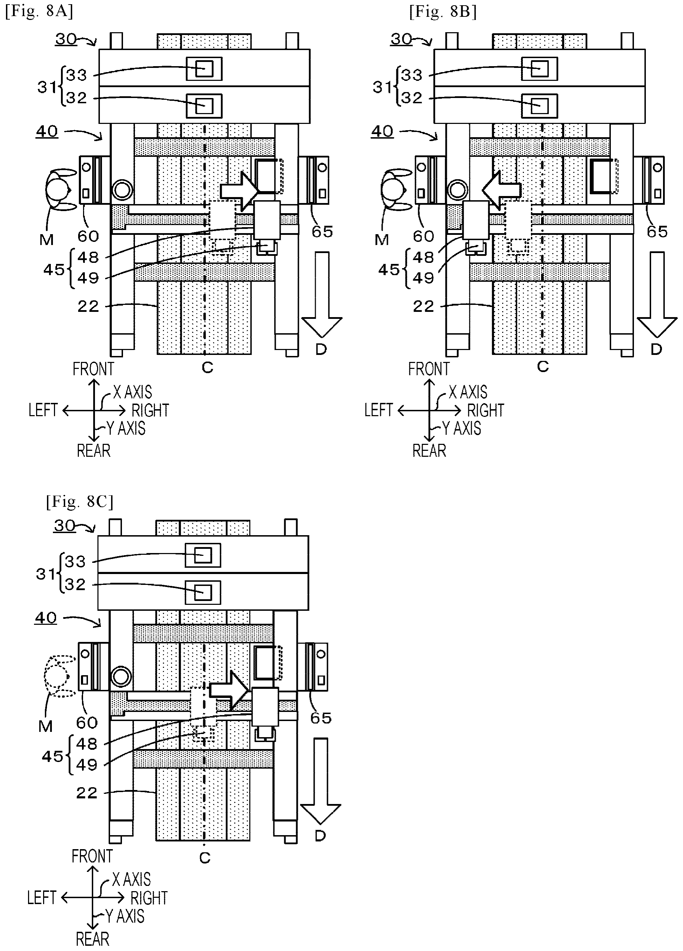

Next, a process when processing system 10 or foreign matter removal device 30 is stopped will be described. In foreign matter removal device 30, in accordance with a stop event corresponding to input by worker M or detection by a device included in processing system 10, which occurs while removal section 40 is in operation, any stop process of moving collection section 45 to the side end portion side of conveyance device 22 and then stopping collection section 45 or stopping collection section 45 on conveyance device 22 is executed. In foreign matter removal device 30, for example, collection section 45 is stopped at an optimum position in accordance with the stop event in consideration of the execution of the restart in a short time, the ease of work of worker M, and the like. Fig. 6 is a flowchart illustrating an example of an operation stop process routine executed by control section 51 of control device 50. Fig. 7 is a diagram illustrating an example of a cycle stop process (Fig. 7A), an error stop process (Fig. 7B), and a system stop process (Fig. 7C). Fig. 8 is a diagram illustrating an example of an abnormal stop process of processing system 10, Figs. 8A and 8B are diagrams when collection section 45 is present outside central region C and Fig. 8C is a diagram when collection section 45 is present in central region C. The operation stop process routine is stored in storage section 52, and is executed in parallel with the execution of the foreign matter removal process routine after foreign matter removal device 30 is activated.

When this routine is started, control section 51 first determines whether the signal from the operation panel and/or the signal from sensing section 37 is acquired (S200). When the signal from the operation panel and/or the signal from sensing section 37 is not acquired, control section 51 stands by. On the other hand, when the signal from the operation panel and/or the signal from sensing section 37 is acquired, control section 51 determines whether a cycle stop command is acquired (S210). The cycle stop command is, for example, a command for worker M to stop foreign matter removal device 30 in accordance with a device related to foreign matter removal device 30, for example, work related to conveyance device 22, as the above-described stop event. When the cycle stop command is acquired, control section 51 moves collection section 45 to the side end portion side opposite to the side on which worker M inputs the cycle stop command and then stops collection section 45 (S220, Fig. 7A). As illustrated in Fig. 7, when the cycle stop command is input from device stop key 63 of first operation panel 60 arranged on a left side of conveyance device 22, control section 51 moves collection section 45 to a right end portion of conveyance device 22. On the other hand, when the cycle stop command is input from device stop key 68 of second operation panel 65 arranged on a right side of conveyance device 22, control section 51 moves collection section 45 to a left end portion of conveyance device 22. In foreign matter removal device 30, in accordance with the cycle stop command in accordance with maintenance of conveyance device 22 or the like, collection section 45 is stopped on the side opposite to the operation panel side on which worker M performs the operation of stopping the operation, that is, on the side end portion side on which worker M is not present.

On the other hand, when the cycle stop command is not acquired in S210, control section 51 determines whether an error stop command that does not require urgency related to foreign matter removal device 30 is acquired (S230). The error stop command is, for example, a command based on the signal from sensing section 37, which is not required to rapidly stop the device, such as running out of lubricating oil or a decrease in air pressure. When the error stop command is acquired, control section 51 moves collection section 45 to the side end portion side of the operation panel operated by worker M most recently and then stops collection section 45 (S240, Fig. 7B). As illustrated in Fig. 7, when first operation panel 60 arranged on the left side of conveyance device 22 is operated by worker M most recently, control section 51 moves collection section 45 to the left end portion of conveyance device 22. On the other hand, when second operation panel 65 arranged on the right side of conveyance device 22 is operated by worker M most recently, control section 51 moves collection section 45 to the right end portion of conveyance device 22. In foreign matter removal device 30, in the error stop command for performing maintenance or the like of removal section 40, collection section 45 is stopped on the side end portion side on which worker M is present such that the work of worker M is easy. Here, control section 51 moves collection section 45 to the most recently operated operation panel side, but may move collection section 45 to the operation panel side on which the operation input for starting driving is performed. In addition, although control section 51 performs the error stop process based on the signal of sensing section 37, control section 51 may display and output the sensing result of sensing section 37, and worker M who checks the sensing result may input the error stop command from the operation panel. In this case, control section 51 may move collection section 45 to the operation panel side on which the error stop command is input and then stop collection section 45.

On the other hand, when the error stop command is not acquired in S230, control section 51 determines whether the system stop command by worker M for processing system 10 including foreign matter removal device 30 is acquired (S250). The system stop command is a command for stopping entire processing system 10, such as a rest time or a leaving time of worker M, as the above-described stop event. The system stop command may be a command based on the input of system stop keys 64 and 69 on the operation panel. When the system stop command is acquired, control section 51 moves collection section 45 to the conveyance path of conveyance device 22 and then stops collection section 45 (S260, Fig. 7C). Here, control section 51 stops collection section 45 in central region C on the conveyance path of conveyance device 22. Central region C of the conveyance path includes, for example, a central position of the conveyance path, and may have a predetermined width with the central position as the center, or may have no width. When entire processing system 10 is stopped, foreign matter removal device 30 assumes a reason for the stop is the work end of worker M such as a break or leaving of worker M, and stops collection section 45 in central region C such that the process can be easily resumed. In this case, control section 51 may move collection section 45 to the initial position and then stop collection section 45. In addition to acquiring the system stop command from the operation panel, control section 51 may acquire a system stop command output from an external device related to processing system 10, such as supervisory device 27.

On the other hand, when the system stop command is not acquired in S250, control section 51 determines whether the abnormal stop command for processing system 10 including foreign matter removal device 30 due to the occurrence of the abnormality other than the emergency stop is acquired (S270). The abnormal stop command is a command acquired via supervisory device 27 when the abnormality has occurred in a device other than foreign matter removal device 30, for example, primary crusher 15 or conveyance device 21. When the abnormal stop command is acquired, control section 51 determines whether the position of collection section 45 is at the center of the conveyance path of conveyance device 22 (S280). When collection section 45 is not at the center of the conveyance path, control section 51 moves collection section 45 to the side end portion side of the conveyance path closer to collection section 45 and then stops collection section 45 (S290, Figs. 8A and 8B). When the abnormality has occurred in the device included in processing system 10, control section 51 quickly retracts collection section 45 to the side end portion side of conveyance device 22 and then stops collection section 45. As illustrated in Fig. 8, control section 51 moves collection section 45 to the right side end portion when collection section 45 is located on the right side of central region C of the conveyance path (Fig. 8A), and moves collection section 45 to the left side end portion when collection section 45 is located on the left side of central region C of the conveyance path (Fig. 8B). On the other hand, when collection section 45 is located at the center of the conveyance path in S280, control section 51 moves collection section 45 to the side end portion side opposite to the side end portion side on which worker M operates the operation panel most recently and then stops collection section 45 (S300, Fig. 8C). When the abnormality has occurred in the devices included in processing system 10, when the movement time or the movement distance are not changed regardless of the movement direction of collection section 45, control section 51 moves collection section 45 to the side end portion of the conveyance path on which it is assumed that worker M is not present and then stops collection section 45 in consideration of the safety of worker M.

After S300, S290, S260, S240, or S220, or when the abnormal stop command is not acquired in S270, control section 51 determines whether the process of regenerating processing material 12 for removing foreign matter 14 from waste material 13 has been completed (S310). When the process of regenerating processing material 12 has not been completed, control section 51 repeatedly executes the processes of S200 and the subsequent steps. On the other hand, when the process of regenerating processing material 12 has been completed in S310, this routine is terminated.

Here, a correspondence relationship between the elements of the present embodiment and the elements of the present disclosure will be clarified. Removal section 40 of the present embodiment corresponds to an example of a removal section of the present disclosure, collection section 45 corresponds to an example of a collection section, sensing section 37 corresponds to an example of a sensing section, and control section 51 corresponds to an example of a control section. Conveyance device 22 corresponds to an example of a conveyance device, and processing material 12 corresponds to an example of a target object. In the present embodiment, an example of a control method for a foreign matter removal device of the present disclosure is also clarified by describing the operation of foreign matter removal device 30.

Foreign matter removal device 30 described above includes removal section 40 configured to remove, using collection section 45, foreign matter 14 contained in processing material 12 as a target object conveyed in conveyance direction D by conveyance device 22, and control section 51 configured to execute any stop process of moving collection section 45 to a side end portion side of conveyance device 22 and then stopping collection section 45 or stopping collection section 45 on conveyance device 22, in accordance with a stop event, corresponding to input by worker M or detection by a device, which occurs while removal section 40 is in operation. In foreign matter removal device 30, since collection section 45 is stopped on the side end portion side of conveyance device 22 or on the conveyance path of conveyance device 22 in accordance with the stop event corresponding to the input by worker M or the detection by the device, collection section 45 of removal section 40 can be stopped at an appropriate position in accordance with the stop event. Therefore, in foreign matter removal device 30, the stop position of removal section 40 can be made more appropriate, and the work efficiency can be further improved.

Further, control section 51 includes, as the stop event, one or more of a cycle stop command by worker M for a device related to foreign matter removal device 30, an error stop command that does not require urgency related to foreign matter removal device 30, a system stop command by worker M for processing system 10 including foreign matter removal device 30, and an abnormal stop command due to occurrence of an abnormality other than an emergency stop for processing system 10 including foreign matter removal device 30. In foreign matter removal device 30, collection section 45 can be stopped at a more appropriate position in accordance with the cycle stop command, the error stop command, the system stop command, and the abnormal stop command. Foreign matter removal device 30 further includes operation section 62 or 67 configured to receive the input by worker M on at least one side end portion side of conveyance device 22, and in accordance with a cycle stop command, by worker M, related to foreign matter removal device 30 as the stop event, control section 51 moves collection section 45 to a side end portion side opposite to operation section 62 or 67 to which worker M inputs the cycle stop command and then stops collection section 45. In foreign matter removal device 30, in accordance with the cycle stop command in accordance with maintenance of conveyance device 22 or the like, collection section 45 is stopped on the side end portion side on which worker M is not present, and thus worker M can easily access conveyance device 22, and work efficiency can be further improved. Foreign matter removal device 30 further includes sensing section 37 configured to sense an error that does not require urgency related to foreign matter removal device 30; and operation section 62 or 67 configured to receive the input by worker M on at least one side end portion side of conveyance device 22, in which, in accordance with an error stop command that does not require urgency related to foreign matter removal device 30 as the stop event based on output of sensing section 37, control section 51 moves collection section 45 to the side end portion side provided with operation section 62 or 67 on which worker M has performed the input and then stops collection section 45. In foreign matter removal device 30, in the error stop command in accordance with the maintenance of removal section 40 or the like, since collection section 45 is stopped on the side end portion side on which worker M is present, worker M can easily access removal section 45, and the work efficiency can be further improved. Foreign matter removal device 30 further includes operation section 62 or 67 configured to receive the input by worker M on at least one side end portion side of conveyance device 22, in which, in accordance with a system stop command by worker M for processing system 10 including foreign matter removal device 30 based on the input from worker M, control section 51 stops collection section 45 on conveyance device 22. In foreign matter removal device 30, in the system stop command in accordance with a break, an end of work, or the like of worker M, since collection section 45 is stopped on conveyance device 22, the removal process can be easily resumed, and work efficiency can be further improved.

Foreign matter removal device 30 further includes sensing section 37 configured to sense an error that does not require urgency of a device related to foreign matter removal device 30, in which, in accordance with an abnormal stop command due to occurrence of an abnormality other than an emergency stop for processing system 10 including foreign matter removal device 30 based on output of sensing section 37, control section 51 moves collection section 45 to a side end portion side closer to a current position and then stops collection section 45. In foreign matter removal device 30, in accordance with the abnormal stop command due to the occurrence of the abnormality in processing system 10, collection section 45 quickly retracts to the side end portion side of conveyance device 22 and is stopped, and thus it is possible to more appropriately handle the abnormality. Foreign matter removal device 30 further includes operation section 62 or 67 configured to receive the input by worker M on at least one side end portion side of conveyance device 22, in which, when collection section 45 is located at a center of the conveyance path of conveyance device 22, control section 51 moves collection section 45 to a side end portion side opposite to the operation section operated by worker M most recently among operation sections 62 and 67 and then stops collection section 45. In foreign matter removal device 30, since collection section 45 moves to the side end portion side on which worker M is not present, it is possible to more safely handle the abnormality.

It goes without saying that the present disclosure is not limited to the above-described embodiment in any way, and the present disclosure can be embodied in various aspects without departing from the technical scope of the present disclosure.

For example, in the above-described embodiment, as the stop event, the cycle stop command, the error stop command, the system stop command, and the abnormal stop command are included, but the present disclosure is not particularly limited thereto, and one or more of these may be omitted, or a stop event different from these may be added. Also in foreign matter removal device 30, the stop position can be made more appropriate in accordance with any of the stop events, and the work efficiency can be further improved. Foreign matter removal device 30 may omit an unnecessary configuration such as sensing section 37 as appropriate in accordance with the stop event. Further, in foreign matter removal device 30 described above, when each command is acquired, the movement and stop operations are performed, but in a case where the position is already at the corresponding position and thus the movement operation is unnecessary, the stop operation may be performed by omitting the movement operation as appropriate.

In the above-described embodiment, foreign matter removal device 30 includes first operation panel 60 and second operation panel 65 each having the operation section, at both side end portions of conveyance device 22, but is not particularly limited thereto, and may include one operation section or three or more operation sections. Also in foreign matter removal device 30, the stop position can be made more appropriate to further improve the work efficiency.

In the above-described embodiment, when the system stop command is acquired, foreign matter removal device 30 moves and stops collection section 45 in central region C of the conveyance path of conveyance device 22, but the present disclosure is not particularly limited thereto, and collection section 45 may be moved to and stopped at any position on the conveyance path. In addition, control section 51 moves collection section 45 to the initial position when the system stop command is acquired, but the present disclosure is not particularly limited thereto, and collection section 45 may be stopped at a position on the conveyance path other than the initial position.

In the above-described embodiment, the present disclosure has been described as processing system 10 including foreign matter removal device 30, but the present disclosure is not particularly limited thereto, and the present disclosure may be foreign matter removal device 30 itself, a control method for foreign matter removal device 30 executed by a computer, or a program of the control method. However, processing system 10 includes primary crusher 15, primary magnetic separator 16, screen machine 17, secondary crusher 18, secondary magnetic separator 19, and supervisory device 27, but the present disclosure is not limited thereto, and one or more of these may be omitted, or a device other than these may be added.

Here, the control method for the foreign matter removal device of the present disclosure may be configured as follows. For example, the control method for the foreign matter removal device of the present disclosure is a control method for a foreign matter removal device including a removal section configured to remove, using a collection section, a foreign matter contained in a target object conveyed in a conveyance direction by a conveyance device, the control method including:
a step of executing any stop process of moving the collection section to a side end portion side of the conveyance device and then stopping the collection section or stopping the collection section on the conveyance device, in accordance with a stop event, corresponding to input by a worker or detection by a device, which occurs while the removal section is in operation.

In the control method for the foreign matter removal device, similarly to the foreign matter removal device described above, it is possible to further improve the work efficiency by making the stop position of the removal section more appropriate. In the control method for the foreign matter removal device, various aspects of the foreign matter removal device described above may be adopted, and a step of achieving each function of the foreign matter removal device described above may be added.

The present description also discloses a technical idea in which "The foreign matter removal device according to Claim 1 or 2" in Claim 4 as originally filed is changed to "The foreign matter removal device according to any one of Claims 1 to 3", a technical idea in which "The foreign matter removal device according to Claim 1 or 2" in Claim 5 as originally filed is changed to "The foreign matter removal device according to any one of Claims 1 to 4", and a technical idea in which "The foreign matter removal device according to Claim 1 or 2" in Claim 6 as originally filed is changed to "The foreign matter removal device according to any one of Claims 1 to 5".

### Industrial Applicability

The present disclosure can be used in the technical field of a device that removes a foreign matter from a target object.

### Reference Signs List

10: processing system, 12: processing material, 13: waste material, 14: foreign matter, 15: primary crusher, 16: primary magnetic separator, 17: screen machine, 18: secondary crusher, 19: secondary magnetic separator, 20 to 25: conveyance device, 27: supervisory device, 28: display section, 29: input device, 30: foreign matter removal device, 31: detection section, 32: imaging section, 33: measurement section, 35: support section, 36: disposal section, 37: sensing section, 40: removal section, 41: X-axis slider, 43: Y-axis slider, 45: collection section, 46: lifting and lowering section, 48: removal head, 49: collection member, 50: control device, 51: control section, 52: storage section, 60: first operation panel, 61: display section, 62: operation section, 63: device stop key, 64: system stop key, 65: second operation panel, 66: display section, 67: operation section, 68: device stop key, 69: system stop key, 71: captured image, 72: captured image, C: central region, D: conveyance direction, M: worker.

## Claims

1. A foreign matter removal device comprising:
a removal section configured to remove, using a collection section, a foreign matter contained in a target object conveyed in a conveyance direction by a conveyance device; and
a control section configured to execute any stop process of moving the collection section to a side end portion side of the conveyance device and then stopping the collection section or stopping the collection section on the conveyance device, in accordance with a stop event, corresponding to input by a worker or detection by a device, which occurs while the removal section is in operation.

2. The foreign matter removal device according to Claim 1, wherein the control section includes, as the stop event, one or more of a cycle stop command by the worker for a device related to the foreign matter removal device, an error stop command that does not require urgency related to the foreign matter removal device, a system stop command by the worker for a processing system including the foreign matter removal device, and an abnormal stop command due to occurrence of an abnormality other than an emergency stop for the processing system including the foreign matter removal device.

3. The foreign matter removal device according to Claim 1 or 2, further comprising:
an operation section configured to receive the input by the worker on at least one side end portion side of the conveyance device,
wherein, in accordance with a cycle stop command by the worker for a device related to the foreign matter removal device as the stop event, the control section moves the collection section to a side end portion side opposite to the operation section to which the worker inputs the cycle stop command and then stops the collection section.

4. The foreign matter removal device according to Claim 1 or 2, further comprising:
a sensing section configured to sense an error that does not require urgency related to the foreign matter removal device; and
an operation section configured to receive the input by the worker on at least one side end portion side of the conveyance device,
wherein, in accordance with an error stop command that does not require urgency related to the foreign matter removal device as the stop event based on output of the sensing section, the control section moves the collection section to the side end portion side provided with the operation section on which the worker has performed the input and then stops the collection section.

5. The foreign matter removal device according to Claim 1 or 2, further comprising:
an operation section configured to receive the input by the worker on at least one side end portion side of the conveyance device,
wherein, in accordance with a system stop command by the worker for a processing system including the foreign matter removal device based on the input from the worker, the control section stops the collection section on the conveyance device.

6. The foreign matter removal device according to Claim 1 or 2, further comprising:
a sensing section configured to sense an error that does not require urgency of a device related to the foreign matter removal device,
wherein, in accordance with an abnormal stop command due to occurrence of an abnormality other than an emergency stop for a processing system including the foreign matter removal device based on output of the sensing section, the control section moves the collection section to a side end portion side closer to a current position and then stops the collection section.

7. The foreign matter removal device according to Claim 6, further comprising:
an operation section configured to receive the input by the worker on at least one side end portion side of the conveyance device,
wherein, when the collection section is located at a center of the conveyance device, the control section moves the collection section to a side end portion side opposite to the operation section operated by the worker most recently and then stops the collection section.

8. A control method for a foreign matter removal device including a removal section configured to remove, using a collection section, a foreign matter contained in a target object conveyed in a conveyance direction by a conveyance device, the control method comprising:
a step of executing any stop process of moving the collection section to a side end portion side of the conveyance device and then stopping the collection section or stopping the collection section on the conveyance device, in accordance with a stop event, corresponding to input by a worker or detection by a device, which occurs while the removal section is in operation.
